Europäisches Patentamt

European Patent Office

Office européen des brevets

(11) Publication number : **0 479 547 A2**

(12) **EUROPEAN PATENT APPLICATION**

(21) Application number : **91308970.2**

(22) Date of filing : **01.10.91**

(51) Int. Cl.⁵ : **G11B 5/55**

(30) Priority : **05.10.90 JP 269118/90**

(43) Date of publication of application :
**08.04.92 Bulletin 92/15**

(84) Designated Contracting States :
**DE FR GB NL**

(71) Applicant : **MATSUSHITA ELECTRIC
INDUSTRIAL CO., LTD
1006, Oaza Kadoma, Kadoma-shi
Osaka 571 (JP)**

(72) Inventor : **Torii, Hideo
9-18, Nishikonoikecho-1-chome
Higashiosaka-shi (JP)**
Inventor : **Fujii, Eiji
1-A23-304, Otokoyama Koro
Yawata-shi (JP)**
Inventor : **Hattori, Masumi
25-3, Kohoku-1-chome
Hirakata-shi (JP)**
Inventor : **Aoki, Masaki
7-21, Aogein
Minoo-shi (JP)**
Inventor : **Kuribayashi, Kiyoshi
590-1, Matsudome, Uenoharamachi
Kitatsuru-gun, Yamanashi-ken (JP)**

(74) Representative : **Sorrell, Terence Gordon et al
Fitzpatricks Europe House World Trade Center
London E1 9AA (GB)**

(54) **Rigid disk and signal recording and reproducing method using same.**

(57) A rigid disk includes a transparent glass substrate having guide grooves for a laser beam for an optical disk which grooves are formed in one surface of the substrate, a reflective film formed on the lower surface of the substrate, a light-transmitting magnetic oxide film formed on the other surface of the substrate which is flat and smooth, and a lubricating layer formed on the magnetic oxide film. The magnetic oxide film has only a spinel-type crystal structure, and contains iron and cobalt. A magnetic head and an optical head are mounted on an arm movable back and forth relative to the rigid disk in a radial direction of the rigid disk. A laser beam emitted from the optical head passes through the lubricating layer, the magnetic oxide film and the substrate of the rigid disk, and is reflected by the reflective film to be returned to the optical head, thereby detecting a track signal formed by a configuration of the grooves by the optical head, so that the driving of the arm is controlled so as to move the magnetic head along a track on a recording surface of the rigid disk in a servo-controlled manner.

F I G. 2

EP 0 479 547 A2

## BACKGROUND OF THE INVENTION

This invention relates to a rigid disk capable of a high-density of magnetic recording and also to a signal recording and reproducing method using such a rigid disk.

Recently, rigid or hard disk units have been required to have a small size and a high-density design. To meet such a small-size requirement, it is necessary to reduce the number and size of disks used in the hard disk unit. Therefore, to achieve the small-size construction and the high-density design at the same time, it is necessary to considerably increase the recording density per magnetic disk.

In order to enhance the recording density in a magnetic disk, it is necessary to improve a track recording density in a circumferential direction of the disk and also to improve a track density in a diametrical direction of the disk.

The improvement of the track recording density greatly depends on the ability of a magnetic head and magnetic properties of a recording medium of the disk, and also depends on a flying height of the magnetic head. In order to improve the ability of the magnetic head, a MIG head has now been used instead of a ferrite head. Further, the use of a thin-film head has also been proposed. There has now been used a recording medium of a high coercivity for the disk. The use of a perpendicular magnetic recording system has also been proposed. An attempt to reduce the flying height of the magnetic head has also been made.

In order to enhance the recording density, the magnetic head for reading and writing is required to be accurately positioned on a desired track. Therefore, the improvement of the track density greatly depends on the accuracy of positioning of the magnetic head. As compared with a flexible disk unit where the flexible disk can be changed, the hard disk unit can achieve the positioning of the magnetic head with a higher precision since it has rigid disks; however, in order to achieve a track density of 1,000 TPI or more, a servo control is needed. The track density is enhanced up to about 2,000 TPI by the servo control.

There are two kinds of servo control, that is, a data surface servo in which servo information is incorporated in a data recording surface, and a servo surface servo in which the whole of one recording surface is used exclusively for the servo information. Mainly, the servo surface servo is used for a type of disk drive or unit having a sufficient number of disks, that is, recording surfaces.

However, the hard disk unit to be incorporated in a personal computer is required not only to be small in size but also to be thin, and to achieve such a thin design, the number of disks to be used comes to be limited. Therefore, naturally, it comes to be necessary to adopt the data surface servo.

In the data surface servo, part of the recording surface is used for the servo information, and accordingly the capacity of recording of the data information is reduced. Therefore, in order that the data information can be recorded in the recording surface as much as possible, it is not desirable to store the servo information in the recording surface.

There are other types of recording system capable of achieving a high recording density in a high track density. Examples of such recording system includes an optical recording system and a magnetooptical recording system. In such a system, a guide groove, constituted by pits and projections having track information, is formed in the disk substrate, and the guide groove is detected by a laser beam from an optical head so as to obtain the track information to thereby detect the track position in a servo-controlled manner.

If, by application of the same concept to a rigid disk, a guide grooves are formed and a track servo is performed, it is considered that the recording surface can be used for storing only the data information, so that the recording capacity can be increased. However, in order for the magnetic head to fly over the recording surface in a stable manner, the recording surface need to be flat and smooth. The guide grooves in the recording surface will cause a crash of the magnetic head, and it is virtually difficult to put this proposal into practice.

On the other hand, it is considered effective to form guide grooves in the opposite side (reverse surface) of the disk facing away from the recording surface. However, a magnetic recording medium material heretofore used for the recording surface is a thin-film medium of Co-Ni/Cr alloy which naturally does not allow a laser beam to pass therethrough. Therefore, a problem arises that it is difficult to provide a magnetic disk of a type in which the track position is detected by optical servo means.

## SUMMARY OF THE INVENTION

With the above problems of the prior art in view, it is an object of this invention to provide a rigid disk in which a track position can be detected by an optical servomechanism, and also to provide a signal recording and reproducing method using such a rigid disk.

To achieve the above object, the present invention does not adopt a rigid disk of the data surface servo system utilized in the conventional high-density magnetic recording, as well as a signal recording and reproducing method using such a rigid disk, but adopts a rigid disk of an optical servo system capable of achieving a higher recording density, as well as a signal recording and reproducing method using such a rigid disk. Namely, a reflective film layer is formed on one surface (grooved surface) of a transparent disk substrate having guide grooves for a laser beam for an optical disk, and a light-transmitting magnetic oxide thin film layer is formed on the other surface of the disk substrate which is flat and smooth, and a lubricating layer is further formed on the magnetic oxide film layer, thereby forming the rigid disk.

Alternatively, two disks of such a construction are prepared, and the reflective films or film layers formed respectively on grooved surfaces of the two disks are bonded together to provide a single rigid disk.

As another alternative, a reflective film layer of one disk of the first construction is bonded to one flat smooth surface of another disk having a light-transmitting magnetic oxide thin film on the other flat smooth surface thereof, thereby providing a single disk, and lubricating layers are formed respectively on the opposite surfaces of this single disk to provide a rigid disk.

According to the invention, method for recording/reproducing signals is carried out as follows; A magnetic head and an optical head are mounted on an arm or arms movable back and forth in a radial direction of the rigid disk. A laser beam emitted from the optical head passes through the lubricating layer, the magnetic oxide thin film layer and the glass substrate of the rigid disk, and is reflected by the reflective film below the glass substrate to be returned to the optical head, thereby detecting a track signal formed by a configuration of the grooves in the lower surface of the glass substrate by the optical head, so that the driving of the arm is controlled so as to move the magnetic head along a track on a recording surface of the rigid disk in a servo-controlled manner.

For producing the rigid disk of the present invention, there are used a pair of press dies constituted by a die for forming the groove by transfer, and another die having a flat smooth transfer surface polished to a mirror surface. A glass plate heated to an elevated temperature is pressed by the pair of dies to provide the disk substrate with the grooves. Then, the reflective film layer is deposited on the grooves surface of the disk substrate by vacuum evaporation, sputtering, or plating, and the light-transmitting magnetic oxide thin film of iron-cobalt oxide spinel having a columnar texture is formed on the flat smooth surface of the disk substrate by a plasma assisted MO-CVD (metal-organic chemical vapor deposition) method, and then the lubricating layer is formed on the magnetic oxide film, thereby producing the rigid disk.

Alternatively, two disks of the above construction but before the formation of the lubricating layer are prepared, and the two disks are bonded together at their reflective films to provide the single disk, and then the lubricating layers are formed respectively on the magnetic oxide films on the opposite surfaces of this single disk.

As another alternative, there is prepared one disk of the above construction but before the formation of the lubricating layer, and there is also prepared another disk having flat smooth surfaces at both sides thereof. For producing this another disk, a disk substrate formed by pressing a glass plate, heated to an elevated temperature, by a pair of dies having flat smooth transfer surfaces each polished to a mirror surface, and then, the light-transmitting magnetic oxide thin film of iron-cobalt oxide spinel having the columnar texture is deposited on one flat smooth surface of the disk substrate by a plasma assisted MO-CVD method. These two disks are bonded together by an adhesive with their magnetic oxide films directed away from each other to thereby provide a single disk, and then the lubricating layers are formed respectively on the magnetic oxide films.

The inventors already found out that a perpendicularly-magnetized film essentially consisting of a spinel-type magnetic oxide material (in which fine columnar grains are grown relative to a substrate), is produced by a plasma assisted MO-CVD method, using a MO (metal-organic) material of which representative or typical example is $\beta$-diketone group complex such as metal (e.g. iron and cobalt) acetylacetonate (U.S. Patent No. 4,975,324, and E. Fujii, H. Torii and M. Aoki, IEEE TRANSLATION JOURNAL ON MAGNETICS IN JAPAN, Vol. 4, No. 8, p. 512 to 517. (1989)).

The film material thus obtained is an oxide material having a spinel-type crystal structure identical with that of a magnetic ceramics material (commonly called ferrite), and this film material is in case of a thickness of 2,000 to 3,000 Å, low in absorptivity and is brown and transparent.

Thus, the rigid disk of the above construction includes the above mentioned cobalt ferrite magnetic thin film formed by this plasma assisted MO-CVD, and the glass disk substrate, such as one used for an optical disk, having the guide grooves for optical servo. And, there is provided a hard disk unit which comprises thus constructed rigid disk, and a magnetic head moving portion driven by a servo control associated with the optical head for detecting recording tracks. In the hard disk unit of the invention thus constructed, as compared with a hard disk unit using a conventional magnetic disk of data surface servo in which servo signal information for the track control is incorporated in a data signal recording surface, a larger amount of data signal is recorded if the same number of magnetic disks are used, and therefore the hard disk unit of a higher density and a larger recording capacity can be provided.

With the above construction, the rigid disk of the present invention cooperates with the signal recording and reproducing method of the present invention to provide the hard disk unit. In this hard disk unit, the track signal is detected by the optical head through the optical servo guide groove formed in the rigid disk of the present invention, so that the magnetic head can move back and forth over the magnetic recording surface in the radial direction of the rigid disk, thus providing a highly precise servo drive control. Therefore, the magnetic head can be accurately positioned on a desired track, which is indispensable to the high density recording. Namely, one rigid disk has the same function as a disk having different recording surfaces used respectively for data information and servo signal information. With this arrangement, part of the recording surface need not be used for the servo signal information as in the conventional data surface servo system, and therefore the disk of the same track density and the same track recording density as the conventional disk has a higher recording density for the data information.

The magnetic recording surface for recording the data information is a flat and smooth surface as in the conventional rigid disk, and therefore even if a magnetic head of a type which flies a small height in order to enhance the track recording density is used, there is less risk of a head crash.

Therefore, in the rigid disk of the present invention and the hard disk unit of the present invention, not only the track density but also the track recording density can be enhanced, and there can be achieved a hard disk unit with large capacity and compact size having small-size and small-diameter disks. In the method of forming the rigid disk according to the present invention, the hard disk unit of a compact construction and a large capacity can be produced at a reduced cost.

## BRIEF DESCRIPTION OF THE DRAWINGS

Fig. 1 is a schematic cross-sectional view of a main portion of a rigid disk of according to the first embodiment of the present invention shown in Example 1;

Fig. 2 is a schematic view of a pressing machine for pressing a glass material used in producing the disk of the embodiment of the present invention;

Fig. 3 is a schematic, cross-sectional view of a plasma assisted MO-CVD apparatus used for forming a magnetic oxide film in the disk according to the embodiment of the present invention;

Fig. 4 schematic perspective view of a main portion of a rigid or hard disk unit provided for explaining a recording and reproducing method according to an embodiment of the invention shown in the Example 1;

Fig. 5 is a schematic cross-sectional view of a main portion of a rigid disk according to the second embodiment of the invention shown in Example 2;

Fig. 6 is a schematic perspective view of a main portion of a hard disk unit provided for explaining a recording and reproducing method according to another embodiment of the invention shown in the Example 2;

Fig. 7 is a schematic cross-sectional view of a main portion of a rigid disk according to the third embodiment of the invention shown in Example 3; and

Fig. 8 is a schematic perspective view of a main portion of a hard disk unit provided for explaining a recording and reproducing method according to still another embodiment of the invention shown in the Example 3.

## DESCRIPTION OF THE PREFERRED EMBODIMENTS

### Example 1

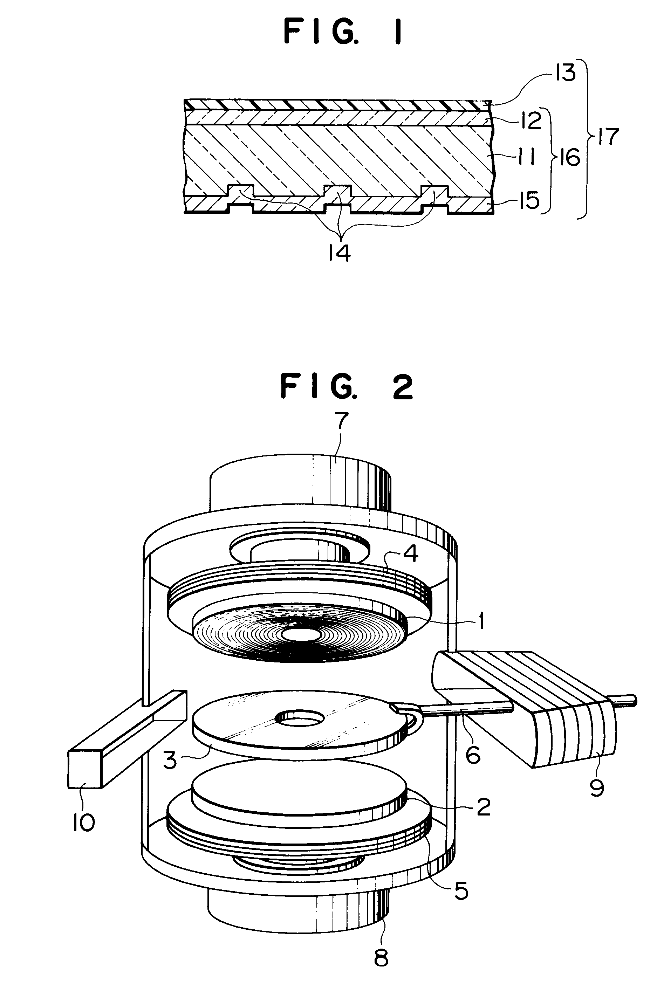

Fig. 1 is a schematic cross-sectional view of a main portion of a rigid disk according to the first preferred embodiment of the present invention. In Fig. 1, a disk substrate 11 of glass is of a disk-shape, and has a rotatable shaft-mounting hole (not shown in Fig. 1) formed through a central portion thereof. One surface of the glass disk substrate 11 is flat and smooth, and spiral-type guide grooves (recessed pattern) 14 for optical servo are formed in the other surface of the disk substrate 11. A light-transmitting magnetic oxide thin film 12 of a magnetic recording medium material is formed on the flat smooth surface of the glass disk substrate 11, and a lubricating layer 13 of a fluorine-type organic material is formed on the magnetic oxide film 12. A reflective film 15 of aluminum is formed on the other surface of the glass disk substrate 11 having the groove 14.

First, the glass substrate 11 for the above rigid disk 17 was prepared by press molding in the following manner:

A densely-sintered cylinder of a tungsten carbide alloy (with composition of $WC/Co/Cr_3C_2 = 91/8/1$ (wt.%)) having a diameter of 98 mm and a height of 30 mm was prepared, and one end face of this cylinder was polished into a mirror surface. Then, a film layer of a platinum-iridium alloy having a thickness of 3 $\mu$m was deposited on this mirror surface, by a $r_f$ (radio)-frequency sputtering device. Then, a spiral groove was formed in this alloy film by photolithography and an ECR ion etching process, thereby preparing an upper die 1 for fabricating the substrate of the rigid disk. The spiral groove had a width of 5.2 $\mu$m and a depth of 0.064 $\mu$m, and spirally extended from the central portion toward the outer periphery at a pitch of 6 $\mu$m. Similarly, there was prepared a cylinder of a tungsten carbide alloy which had the same shape as the above-mentioned cylinder and had a platinum-iridium alloy film simularly formed thereon, and then the surface of the sputtered film was polished into a mirror surface, thereby preparing a lower die 2 for fabricating the substrate of the rigid disk.

The pair of upper and lower dies 1 and 2 were set in a pressing machine shown in Fig. 2, and a glass disk (which had a diameter of 95.0 mm and a thickness of 1.21 mm and had a circular hole with a diameter of 25.0 mm formed through a central portion thereof) heated to 600°C was disposed between the pair of upper and lower dies 1 and 2 heated to 700°C. Then, the pair of upper and lower dies 1 and 2 were pressed toward each other at a pressure of 2 kg $cm^{-2}$, so that the final distance between the pair of dies 1 and 2 became 1.20 mm, and this condition was maintained for 2 minutes. The glass disk kept held between the dies 1 and 2 was cooled down to 450°C, for 10 minutes, and then the molded glass disk was removed.

The glass disk 3 had a refractive index of 1.5.

In Fig. 2, reference numerals 4 and 5 denote heaters for heating the dies 1 and 2, respectively, reference numeral 6 a supply jig for supplying the glass disk 3, reference numeral 7 a piston-cylinder device for moving the upper die 1, reference numeral 8 a piston-cylinder device for moving the lower die 2, reference numeral 9 a tunnel kiln for preheating the glass disk 3, and reference numeral 10 an outlet for taking out the molded glass disk 11. In the above-mentioned manner, there was prepared the glass disk substrate 11 for the rigid disk which substrate had the spiral guide groove (recessed pattern) (width: 0.8 µm; depth: 0.064 µm; track pitch: 6 µm) for the optical-servo and the rotatable shaft-mounting hole at its central portion.

A rigid disk 17 having the thus prepared glass disk substrate 11 was produced in the following manner. A light-transmitting magnetic oxide thin film 12 (2,000 Å in thickness) of a magnetic recording medium material was deposited by a plasma assisted MO-CVD process, as described below, on that surface of the glass disk substrate 11 shaped by the lower die 2.

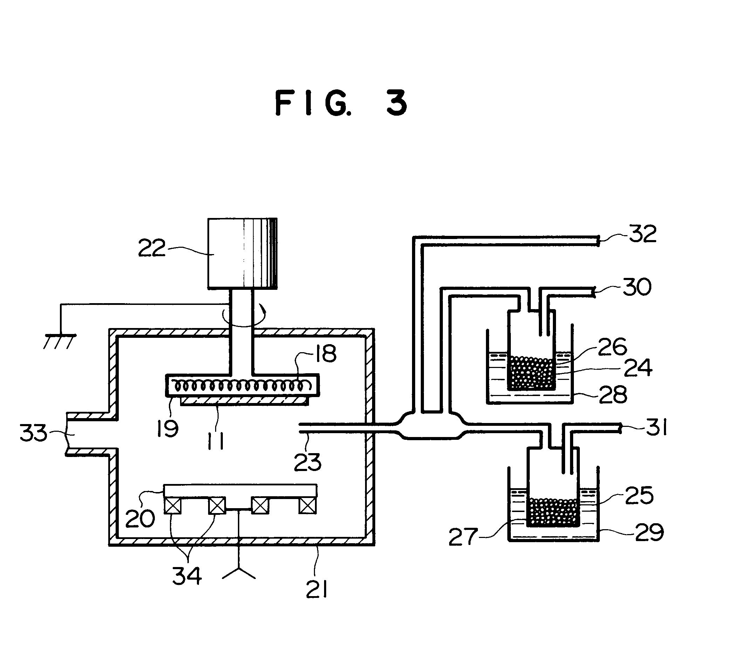

Fig. 3 shows the structure of the plasma assisted MO-CVD apparatus used for forming the light-transmitting magnetic oxide film of a magnetic recording medium material. In this plasma assisted MO-CVD apparatus, a plasma is produced by the rf voltage between an earth electrode 19 and a RF electrode 20 which are disposed parallel to each other within a vacuum chamber 21, so that a feedstock gas of organic metal is decomposed in the plasma to be deposited, in the form of a thin film, on the substrate by chemical vapor deposition (CVD). The prepared glass disk substrate 11 was held in close contact at one side with the earth electrode 19, and was heated and maintained at 400°C by a substrate heater 18. Iron (III) acetylacetonate 24 and cobalt (III) acetylacetonate 25 were charged respectively into feedstock vaporizing vessels 26 and 27, and were heated respectively to 135°C and 135°C 125°C by respective oil baths 28 and 29. Gases of these acetylacetonate complexes, produced as a result of the vaporization by heating, were caused to flow into the vacuum chamber 21 respectively by carrier gases (nitrogen) 30 and 31 (10 ml/min.) Oxygen gas 32 serving as a reaction gas was supplied at a flow rate of 15 ml/min., and was mixed with the above gases, and this mixture gas was introduced into the vacuum chamber 21 from an injection nozzle 23. At this time, the vacuum chamber 21 was evacuated to vacuum through an evacuation port 33 to be kept to a vacuum level of 6.66 mPa. Then, a magnetic field was created between the earth electrode 19 and the RF electrode 20 by magnets 34, and a rf energy (13.56 MHz; 400 W) was given to the RF electrode 20 for 6 minutes, so that a plasma was formed between the RF electrode 20 and the earth electrode 19, thereby forming the light-transmitting magnetic oxide film 12 on the surface of the glass disk substrate 11. During the formation or deposition of this film, the glass disk substrate 11 was rotated by a substrate rotating motor 22 at a speed of 120 rpm. An absorption coefficient $\alpha$ of the light-transmitting magnetic oxide film 12 was 1.10 $\mu m^{-1}$ at a wavelength of 780 nm. Further, a film of aluminum (thickness: 2,000 Å) was deposited by vacuum evaporation on that surface of the glass disk substrate 11 shaped by the upper die 1 and having the spiral groove (recessed pattern) 14, thereby forming a reflective film 15.

In this manner, the disk 16 having no lubricating layer was prepared. Then, a lubricating agent of a fluorine-type organic material was deposited onto the light-transmitting magnetic oxide film 12 of this disk to form a lubricating layer 13.

In this manner, the rigid disk 17 according to the first embodiment of the present invention was prepared.

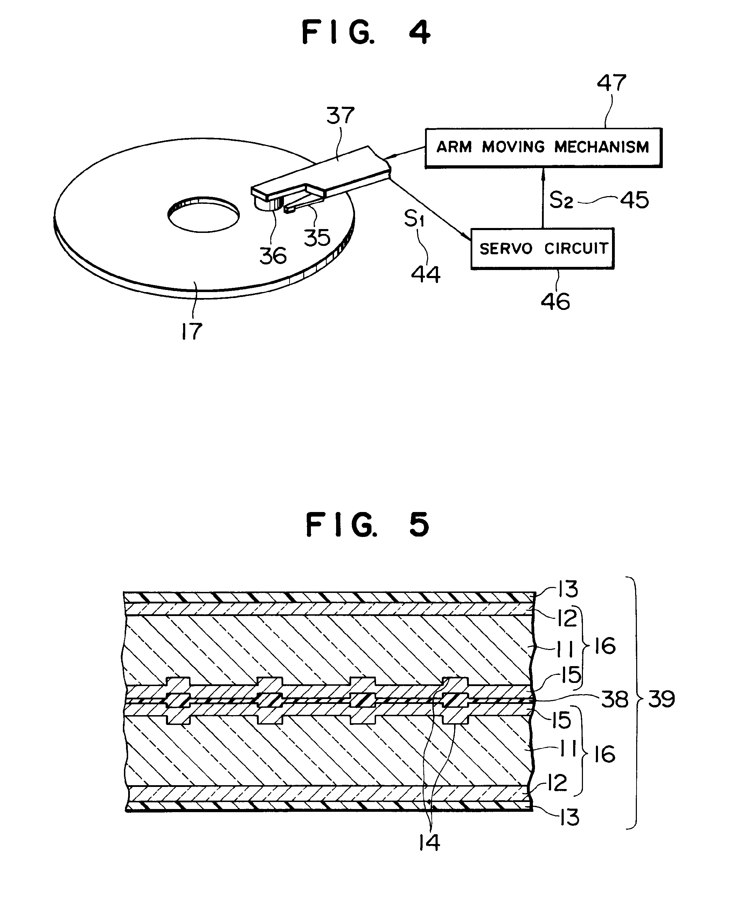

Fig. 4 shows a main portion of a rigid or hard disk unit for the purpose of explaining a signal recording and reproducing method according to an embodiment of the invention using the rigid disk 17. This hard disk unit comprises the rigid disk 17 rotated about its axis by a rotation drive device (not shown), a magnetic head 35 for writing/reading signals relative to the magnetic recording surface of the disk 17 formed by the light-transmitting magnetic oxide film 12 of a magnetic recording medium material, and an optical head 36 for reading a track signal in the form of the groove 14 in the disk 17. The magnetic head 35 and the optical head 36 are mounted on an arm 37 in highly-precisely positioned relation thereto. The arm 37 is driven by an arm moving mechanism 47 (which is controlled by a servo circuit 46) to move back and forth in a radial direction of the rigid disk 17 as described below in detail.

The optical head 36 is similar in construction to an optical head used in a compact disk (CD) unit or the like, and has a semiconductor laser device for a wavelength of 780 nm. The optical head 36 comprises a laser beam emitting portion and a light receiving portion. A laser beam, emitted from the laser beam emitting portion of the optical head 36 transmits or passes through the lubricating layer 13 and the light-transmitting magnetic oxide film 12, and is reflected by the reflective film 15 (which covers the groove 14), formed on the lower surface of the glass disk substrate, to be returned to the light receiving portion of the optical head 36, so that the optical head 36 detects the track signal, defined by the configuration of the groove at the lower surface of the glass substrate, as a signal of brightness and darkness. This signal is converted into an electrical signal $S_1$ (detected track position signal 44) by the light receiving portion of the optical head 36, and is fed to the servo circuit 46. In response to the electrical signal $S_1$, the servo circuit 46 delivers an electrical signal $S_2$ (arm control signal 45) to the arm moving mechanism 47. In response to the electrical signal $S_2$, the arm moving mechanism 47 is operated to drive the arm 37, thereby moving the magnetic head 35 over the surface of the rigid disk 17 in a servo-controlled manner relative to the track of the recording surface.

The magnetic head 35 was a MIG head which had a gap length (GL) of 0.25 μm, a track width (Tw) of 5 μm, and a flying height of 0.10 μm at a relative speed of 10 m/sec. The speed of rotation of the rigid disk 17 was 3,600 rpm.

The track signal of the groove 14 in the rigid disk 17 was read by the optical head 36, and in response to this signal, the servo circuit 46 controlled the arm moving mechanism 47 so that the arm 37 could be moved back and forth with high precision. It has been confirmed that the magnetic head 35 mounted on the aim 37 could precisely travel along the recording track of the magnetic recording surface.

At this time, a reproduction output of the magnetic head was 136 $mV_{p-p}$ at a recording wavelength of 1.18 μm (recording density: 43 kFRPI), and was sufficient for the reading (playback or reproduction) of the recorded signals. A cross talk from the adjoining track was substantially negligible.

By using the rigid disk 17 and the above-mentioned signal recording and reproducing method according to the embodiment of the present invention in combination, even a part of the information recording surface of the magnetic disk does need not be used for the servo signal information, distinct from the conventional hard disk unit, and besides a track pitch of 6 μm (that is, as high a track density as 4233 TPI), which has been considered difficult to be achieved even in the data surface servo system, could be achieved.

After the electromagnetic conversion characteristics of the optical servo mechanism were measured, the rigid disk 17 was taken out from the hard disk unit, and the lubricating layer 13 was removed from the rigid disk 17 by the use of acetone and ethylether, and then the magnetic properties thereof were measured and crystal structure thereof was analyzed by an X-ray diffraction. Further, the rigid disk was broken, and the surface of the magnetic thin film and the broken or ruptured surface thereof were observed by the use of a scanning-type electron microscope of a high resolution. Further, the chemical composition of the magnetic film was analyzed by a chemical analysis. The results of the magnetic measurement indicated that the coercivity Hc of the perpendicular magnetization component of the rigid disk was 1,200 Oe and that the coercivity Hc of the magnetization component along the plane of the film was 800 Oe. The saturated magnetization Ms was 250 emu/cm³. The results of the X-ray diffraction indicated that the light-transmitting magnetic oxide film 12 consisted of an iron-group oxide of a spinel-type crystal structure. The results of the chemical analysis indicated that the mole ratio of iron to cobalt (Fe: Co) was 93 : 7. Namely, it has been found that the light-transmitting magnetic oxide film 12 consisted of the oxide with the composition of $Fe_{2.79}Co_{0.21}O_4$ having a spinel-type crystal structure. From the observation by the scanning-type electron microscope, it has been found that the light-transmitting magnetic oxide film 12 was the film of a columnar texture or structure in which columnar grains having a diameter of 300 to 600 Å were densely upstanding relative to the glass disk substrate 11.

Example 2

According to the same procedure of the above-mentioned Example 1, there were prepared two disks 16 of a cross-sectional structure as shown in Fig. 1 but having no lubricating layer 13. The two disks 16 were bonded or laminated together at their one surfaces having respective grooves 14 and respective reflective layers 15, using a resin-type adhesive 38. The laminated disks were dipped in a liquid bath containing a lubricating agent of a fluorine-type organic material, and were coated with this lubricating agent, so that a lubricating layer 13 was formed over the laminated disks 16. In this manner, as schematically shown in Fig. 5, a rigid disk 39 according to the second embodiment of the present invention having the magnetic recording surfaces respectively at opposite sides thereof was prepared.

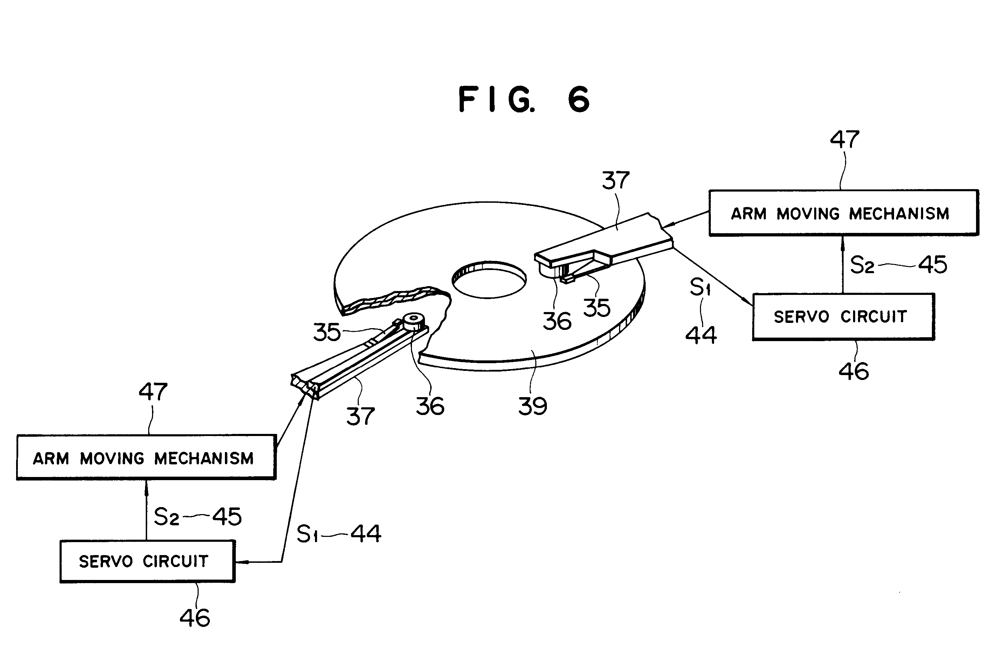

Fig. 6 shows a main portion of a rigid or hard disk unit for the purpose of explaining a signal recording and reproducing method according to another embodiment of the invention using the rigid disk 39. This hard disk unit comprises the rigid disk 39 rotated about its axis by a rotation drive device (not shown), and two arms 37 each having a magnetic head 35 and an optical head 36 which are similar respectively to those of Fig. 4 (Example 1). The two arms 37 are driven respectively by arm moving mechanisms 47 to move back and forth in a radial direction of the rigid disk 39.

Each of the optical heads 36 reads the track signal of the groove 14 within the rigid disk 39, and in response to this signal, a servo circuit 46 controls the arm moving mechanism 47, so that the arm 37 is moved back and forth with a high precision. It has been confirmed that the magnetic head 35 mounted on the arm 37 could travel along the recording track on the magnetic recording surface of the rigid disk 39 in a precisely positioned manner.

It has been further confirmed that the hard disk unit of this construction could also achieve a high track density as in the Example 1 but at both sides of the disk. Namely, by using the rigid disk 39 of the invention and the signal recording and reproducing method according to this embodiment of the invention in combination, the hard disk unit having the single disk could have a large recording capacity.

Example 3

There were prepared two dies similar to the lower die 2 used in the above Example 1 for fabricating the glass substrate, and using a glass disk 3 and a pressing machine similar respectively to those used in Example 1, a glass substrate disk 40 having opposite flat and smooth mirror surfaces was fabricated. A light-transmitting magnetic oxide film 12 of a magnetic recording medium material similar to that of Example 1 was formed on one flat surface of the glass substrate 40. In this manner, there was prepared a glass disk 41 having a magnetic recording surface 12.

According to the same procedure of the above Example 1, there was prepared one disk 16 of a cross-sectional structure as shown in Fig. 1 but having no lubricating layer 13.

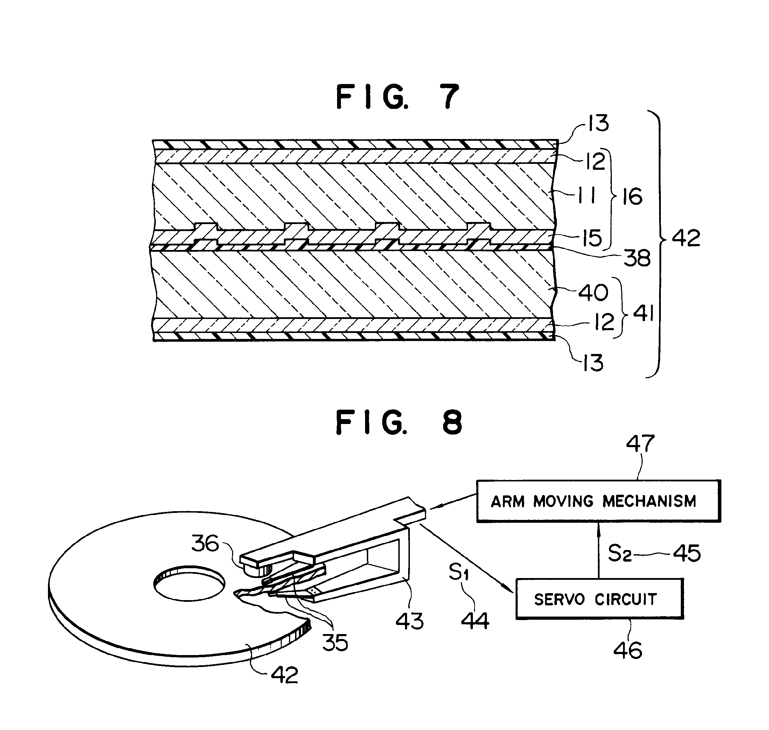

The surface of the disk 16 having a groove 14 and a reflective film 15 was bonded to a surface of the glass disk 41, having no magnetic recording surface, by a resin-type adhesive 38. Then, the thus laminated disks were dipped in a liquid bath containing a lubricating agent of a fluorine-type organic material, and were coated with this lubricating agent, so that a lubricating layer 13 was formed. In this manner, as schematically shown in Fig. 7, there was prepared a rigid disk 42 having the magnetic recording surfaces respectively at the opposite sides thereof.

Fig. 8 shows a main portion of a rigid or hard disk unit for the purpose of explaining a signal recording and reproducing method according to still another embodiment of the invention using the rigid disk 42. This hard disk unit comprises the rigid disk 42 rotated about its axis by a rotation drive device (not shown), and an arm 43 of a recumbent U-shape on which two magnetic heads 35, 35 and one optical head 36 each of which is similar to at of Fig. 4 (Example 1) are mounted in a highly precisely positioned manner. The arm 43 of the recumbent U-shape is so arranged that the rigid disk 42 is interposed between the opposed arm portions of the U-shaped arm 43. The arm 43 is driven by an arm moving mechanism 47 to move back and forth in a radial direction of the rigid disk 42.

The optical head 36 reads the track signal of the groove 14 in the disk 16 of the rigid disk 42, and in response to this signal, a servo circuit 46 controls the arm moving mechanism 47, so that the arm 43 of the recumbent U-shape is moved back and forth with a high precision. It has been confirmed that the two magnetic heads 35, 35 mounted on the arm 43 could travel respectively along the two magnetic recording surfaces formed respectively on the disk 16 and the glass disk 41 of the rigid disk 42 in a precisely positioned manner.

It has been confirmed that, in the hard disk unit of this construction, the rigid disk 42 could also have a high track density as in Example 1 but at both sides thereof. Namely, by using the rigid disk 42 and the signal recording and reproducing method according to this embodiment in combination, the hard disk unit having the single disk could have a large recording capacity, as in Example 2.

**Claims**

1. A rigid disk comprising:
   a transparent substrate having a guide groove for a laser beam for an optical disk which grooves are formed in one surface of said substrate, the other surface of said substrate being flat and smooth;
   a reflective film layer on said one surface of said substrate;
   a light-transmitting magnetic oxide thin film layer on said other surface of said substrate; and
   a lubricating layer on said magnetic oxide thin film layer.

2. A rigid disk according to claim 1, in which said light-transmitting magnetic oxide thin film layer has a columnar grain structure in which columnar grains are densely extended generally perpendicularly relative to said other surface of said substrate, said magnetic oxide thin film layer essentially consisting of a spinel-type crystal structure in terms of an X-ray diffraction, and containing iron and cobalt.

3. A rigid disk according to claim 1, in which said substrate having said grooves comprises a disk-shaped glass substrate produced by heating a glass material and then by press-molding said heated glass material.

4. A rigid disk comprising:
   two disks each comprising (i) a substrate having laser beam guide grooves in one surface thereof, the other surface of said substrate being flat and smooth, (ii) a reflective film layer on said one surface of said substrate, (iii) a light-transmitting magnetic oxide thin film layer on said other surface of said substrate, and (iv) a lubricating layer on said magnetic oxide thin film layer;

said two disks being bonded together at their reflective film layers to form a single disk.

5. A rigid disk according to claim 4, in which said light-transmitting magnetic oxide film is of a columnar grain structure in which columnar grains are densely extended generally perpendicularly relative to said other surface of said substrate, said magnetic oxide thin film layer essentially consisting of a spinel-type crystal structure in terms of an X-ray diffraction, and containing iron and cobalt.

6. A rigid disk according to claim 4, in which said substrate having said groove comprises a disk-shaped glass substrate produced by heating a glass material and then by press-molding said heated glass material.

7. A rigid disk comprising:

a first disk comprising (i) a first substrate having laser beam guide grooves in one surface thereof, the other surface of said substrate being flat and smooth, (ii) a reflective film layer on said one surface of said first substrate, and (iii) a first light-transmitting magnetic oxide thin film layer on said other surface of said first substrate,

a second disk comprising (a) a second substrate having flat and smooth surfaces on both sides thereof, and (b) a second light-transmitting magnetic oxide thin film layer on one of said surfaces of said second substrate, the other surface of said second substrate being bonded to said reflective film layer on said one surface of said first substrate to provide a single disk; and

lubricating layers on the first and second light-transmitting magnetic oxide thin film layers.

8. A rigid disk according to claim 7, in which each of said first and second light-transmitting magnetic oxide this film layers has a columnar grain structure in which columnar grains are densely extended generally perpendicularly relative to the adjacent surface of said substrate, each of said magnetic oxide thin film layer essentially consisting of a spinel-type crystal structure in terms of an X-ray diffraction, and containing iron and cobalt.

9. A rigid disk according to claim 7, in which said first substrate having said grooves are a disk-shaped glass substrate produced by heating a glass material and then by press-molding said heated glass material.

10. A signal recording and reproducing method using a hard disk unit including a rigid disk, said rigid disk comprising a glass substrate having grooves in a lower surface thereof, a reflective film layer on said lower surface of said substrate, a magnetic oxide thin film layer on an upper surface of said substrate, and a lubricating layer on said magnetic oxide thin film layer, said method comprising the steps of:

mounting a magnetic head and an optical head on an arm movable back and forth relative to said rigid disk in a radial direction of said rigid disk; and

emitting a laser beam from said optical head, so that said laser beam passes through said lubricating layer, said magnetic oxide thin film layer and said substrate of said rigid disk, and is reflected by said reflective film layer to be returned to said optical head, thereby detecting a track signal, formed by a configuration of said grooves, by said optical head whereby controlling the driving of said arm so as to move said magnetic head along a track on the recording surface of said rigid disk in a servo-controlled manner.

11. A signal recording and reproducing method according to claim 10, in which said rigid disk comprises said glass substrate which has a magnetic recording surface of a light-transmitting magnetic oxide material formed on one side thereof and said groove formed in the other side thereof, said magnetic head and said optical head being so mounted on said arm that said magnetic head and said optical head are disposed in opposed relation to said magnetic recording surface of said rigid disk.

12. A signal recording and reproducing method according to claim 10, in which said rigid disk comprises two glass disks each including a glass substrate which has a magnetic recording surface of a light-transmitting magnetic oxide material formed on one side thereof and a groove formed in the other side thereof, said two glass disks being bonded together with said magnetic recording surfaces directed away from each other, there being provided two said arms, and said magnetic head and said optical head being so mounted on each of said two arms that said magnetic head and said optical head are disposed in opposed relation to a corresponding one of said magnetic recording surfaces of said rigid disk.

13. A signal recording and reproducing method according to claim 10, in which said rigid disk comprises a first glass disk including a glass substrate which has a magnetic recording surface of a magnetic oxide material formed on one side thereof and grooves formed in the other side thereof, and a second glass disk having opposite flat smooth surfaces on one of which a magnetic recording surface of a light-transmitting magnetic oxide material is formed, said first and second disks being bonded together with said magnetic recording surfaces directed away from each other, said arm being of a recumbent U-shape having a pair of opposed arm portions, two said magnetic heads and said optical head being fixedly mounted on said arm, one of said magnetic heads and said optical head being so mounted on a distal end of one of said two arm portions as to face said magnetic recording surface of said first glass disk, and the other magnetic head being so mounted on a distal end of the other arm portion as to face said magnetic recording surface of said second glass disk.

# FIG. 1

# FIG. 2

# F I G. 3

# FIG. 4

ARM MOVING MECHANISM 47

SERVO CIRCUIT 46

S₂ ~ 45

S₁ 44

37 36 35 17

# FIG. 5

13
12
11 ⟩ 16
15
38 ⟩ 39
15
11 ⟩ 16
12
13

14

# FIG. 6

ARM MOVING MECHANISM — 47

SERVO CIRCUIT — 46

S2 — 45

S1 — 44

37

35 36

39

# FIG. 7

# FIG. 8

EP 0 479 547 A2